# DEMANDE DE BREVET EUROPEEN

(11) **EP 3 093 554 A1**
(43) Date de publication de la demande: **16.11.2016**
(21) Numéro de dépôt: 16167302.5
(22) Date de dépôt: 27.04.2016
(51) Int. Cl.: F21S 8/10, G09F 3/00, F21V 3/00

(54) **PROCÉDÉ DE MARQUAGE INVISIBLE, FEU D ÉCLAIRAGE MUNI D'UNE MARQUE D'IDENTIFICATION INVISIBLE ET VÉHICULE AINSI ÉQUIPÉ**

(30) Priorité: 12.05.2015 FR 1554250
(71) Demandeur: Peugeot Citroën Automobiles SA, 78140 Vélizy-Villacoublay (FR)
(72) Inventeur: SEBE, EMERIC, 78390 BOIS D ARCY (FR); SIMANDRE, STEPHANE, 28130 CHARTAINVILLIERS (FR)

(57) **Abrégé**

L'invention concerne un feu de véhicule (20) dont le marquage d'identification technique sur la glace (1) devient invisible après montage de cette glace (1) sur le boitier (12) du feu (20) de véhicule (14). Pour ce faire, le feu (20) de véhicule (14) est équipé d'au moins une zone périphérique de fixation, dent de soudure (11) dans la forme de réalisation illustrée, destinée à l'agrégation sur la protubérance (13) du boitier (12) du feu (20) de véhicule (14). La dent de soudure (11) porte sur sa face d'extrémité (15) une marque d'identification. Cette marque d'identification disparait après agrégation par un traitement thermique de la zone périphérique (11) de la glace (1) sur le boitier (12).

Selon d'autres formes de réalisation, la zone de fixation de la glace (1) est constituée de nervure ou de bourrelet formés sur le pourtour de la glace (1).

Application en particulier aux feux avant ou arrière de véhicule automobile.

## Description

### DOMAINE TECHNIQUE

L'invention se rapporte à un procédé de marquage d'une glace d'éclairage, le marquage étant rendu invisible lors de sa fixation sur un support. L'invention concerne également un feu d'éclairage muni d'une glace avec une marque d'identification rendue invisible selon le procédé évoqué ci-dessus, ainsi qu'un véhicule automobile équipé d'un tel feu placé à l'avant ou à l'arrière du véhicule pour l'éclairage ou la signalisation de ce véhicule.

Une marque d'identification technique est apposée sur la glace de ces feux pour servir de glace d'éclairage, en particulier de feu d'éclairage de véhicule mais aussi de tout équipement qui possède de tels feux (signalisation de circulation automobile ou ferroviaire, appareils ménagers, etc.) est en général constituée en matériau plastique translucide, par exemple en Plexiglass ®.

Ce marquage technique permet de différencier des glaces d'éclairage à fixer à droite et à gauche sur un même véhicule, de déposer une identification de constructeur ou d'indiquer avec précision la position d'installation de la glace.

### ÉTAT DE LA TECHNIQUE

Plusieurs types de marquage existent. Le document de brevet FR2799527 présente une marque d'identification de glace apparente, pour afficher par exemple une certification (en particulier une indication du pays de fabrication), la position du centre de la glace, la marque de fabrique de la glace ou l'identification d'une lampe.

Un autre type de marquage est présenté par le document de brevet US20110310610. Dans ce document, une glace extérieure au feu d'éclairage présente des zones de relief formant les lettres d'une marque commerciale. La lumière diffusée par le feu d'éclairage illumine de manière différenciée les zones de relief et les zones de fond devenues plus fines.

Dans les documents précités, le marquage reste apparent après installation de la glace. Concernant le domaine des marquages invisibles après la pose de la glace sur le feu d'éclairage, le document de brevet US20060102724 présente une marque d'identification placée sur la périphérie de la glace ressemblant à un bourrelet périphérique plat, et constituant une zone servant à la fixation de la glace sur le boitier du feu d'éclairage. La marque est lisible par laser. Pour masquer cette marque, il est alors nécessaire de poser sur ce bourrelet un cache qui en épouse la forme. Cependant un tel bourrelet équipé d'un cache n'est pas adapté aux exigences des fabricants qui recherchent des qualités de finesse, de légèreté et de taille réduite.

Le document de brevet FR2980425 présente un autre exemple de marquage invisible : un feu d'éclairage avant de véhicule à structure complexe, avec un masque de lumière agencé entre la glace et le bord d'un réflecteur. Une marque d'identification par encre sous forme de papier électronique est alors disposée sur un bord du masque. Ce masque étant à l'intérieur du feu d'éclairage, la marque d'identification n'est donc plus apparente pour l'utilisateur, après montage de ce feu d'éclairage. Un tel marquage est également possible sur la partie intérieure de la glace, ce qui le rend visible. Ainsi, seule la structure complexe de ce feu permet un marquage invisible et un tel type de feu est destiné aux phares avant. La structure plus simple des feux arrière ne permet pas l'utilisation de ce type de marquage.

Il apparaît que le marquage invisible à but technique est en général recherché pour faciliter l'identification et la pose de la glace, et l'invisibilité des marques est appréciée du point de vue de la qualité perçue. Cependant, il n'existe pas à l'heure actuelle de marquage de glace de fabrication simple à faible coût, permettant une mise en place directe et sûre, en particulier sans l'introduction de masque, afin de fournir *in fine* une glace installée avec un marquage d'information invisible.

### EXPOSÉ DE L'INVENTION

L'invention vise à s'affranchir de ces inconvénients en réalisant un marquage sur une partie de glace apparente avant le montage et qui disparaît du champ visible lors de l'opération de montage de la glace.

A cet effet, la présente invention a pour objet un procédé de marquage invisible d'une glace d'éclairage fixée sur un support, la glace et le support présentant chacun au moins une zone périphérique de fixation de l'un sur l'autre. Dans ce procédé, un marquage d'identification est préalablement réalisé sur une partie de surface de la zone périphérique de fixation de la glace. Les zones périphériques de fixation de la glace et du support sont ensuite positionnées en vis-à-vis, puis solidarisées l'une à l'autre au moins partiellement de sorte que la partie de surface de la zone périphérique de fixation de la glace contenant le marquage d'identification est agrégée à une partie de surface correspondante de la (d'une) zone de fixation du support. Ainsi, le marquage est rendu invisible du champ de vision après solidarisation des zones de fixation.

Avantageusement, le marquage d'identification est réalisé au choix par moulage ou par chauffage local pour ajouter ou retirer de la matière.

De préférence, la glace et le support sont solidarisés au choix par chauffage, collage et compression thermique des parties de surface des zones périphériques correspondantes.

L'invention se rapporte également à un feu d'éclairage comportant un boitier apte à contenir un dispositif d'éclairage et équipé d'au moins une zone périphérique de fixation d'une glace, cette glace étant équipée d'au moins une zone périphérique de fixation sur le boitier. Les zones périphériques de fixation du boîtier et de la glace sont disposées en vis-à-vis et au moins en partie solidarisées, la (une) zone périphérique de fixation de la glace possédant une marque d'identification agrégée sur une partie de surface solidarisée avec une partie de surface de la (d'une) zone de fixation du boîtier correspondante.

La zone de fixation de la glace - respectivement celle du boîtier - peut s'étendre le long de toute la périphérie de la glace - respectivement du boîtier - de sorte à former une seule zone de fixation sous forme de nervure ou de bourrelet, ou la périphérie de la glace - respectivement du boîtier - est formée de portions discontinues constituant plusieurs zones de fixation formant des dents de soudure.

Selon des modes de réalisation particuliers, le feu d'éclairage possède les caractéristiques suivantes :
- les zones périphériques de fixation de la glace marquée et du support à solidariser peuvent être constituées au choix entre des protubérances et une protubérance et un creux de formes sensiblement complémentaires, la marque d'identification étant réalisée respectivement sur une extrémité de protubérance ou une portion de creux complémentaire;
- la (chaque) zone périphérique de fixation de la glace présente une forme de dent de soudure terminée par une face d'extrémité, la marque d'identification étant formée sur la face d'extrémité de la dent de soudure;
- alternativement, cette marque d'identification est formée sur une face latérale de la dent de soudure;
- la (chaque) zone périphérique de fixation de la glace est constituée d'une nervure en forme de bourrelet s'étendant sur un pourtour de la glace, la marque d'identification étant alors formée sur la nervure ;
- la marque d'identification peut être formée en relief, en particulier en écriture Braille, ou en creux.

L'invention se rapporte également à un véhicule automobile comportant au moins un feu d'éclairage défini ci-dessus, ce feu placé à l'avant et/ou à l'arrière du véhicule pour l'éclairage et/ou la signalisation de ce véhicule.

### PRÉSENTATION DES FIGURES

D'autres données, caractéristiques et avantages de la présente invention apparaîtront à la lecture de la description détaillée non limitative qui suit, en référence aux figures annexées qui représentent, respectivement :
- les figures 1a et 1b, une vue en perspective et en coupe selon le plan B de la figure 1a d'une glace de feu d'éclairage de véhicule selon un exemple de réalisation de l'invention;
- la figure 2, une vue en coupe de la glace de la figure 1b, avec un détail de marque d'identification sur une dent de soudure ;
- la figure 3, une vue en perspective de l'extérieur de la glace d'un feu de véhicule présentant une nervure de soudure dans un autre exemple de réalisation;
- la figure 4, une vue en perspective partielle de l'intérieur de la glace de la figure 3 ;
- la figure 5, une vue perspective en transparence d'une glace pourvue d'un bourrelet comportant une marque d'identification dans un autre exemple de réalisation; et
- la figure 6, un détail agrandi de la marque d'identification du bourrelet de la figure 5.

### DESCRIPTION DÉTAILLÉE

Sur les différentes figures, des éléments ou parties d'éléments identiques portent une même référence. La description d'un même élément représenté dans différentes figures est renvoyée au passage qui le traite en détail. Les désignations concernant « l'extérieur » ou « l'intérieur » d'une glace se rapportent à une vue externe ou, respectivement, interne de cette glace après montage sur le boîtier du feu d'éclairage.

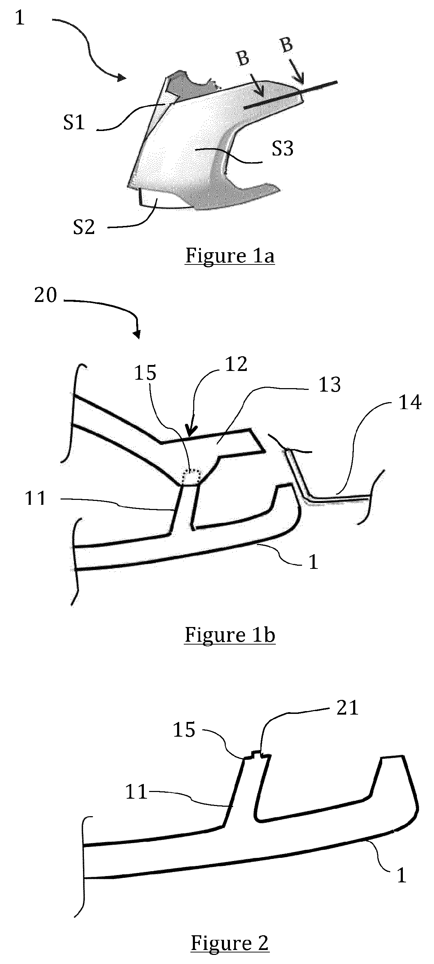

La figure 1a présente une vue en perspective générale d'un exemple glace de feu de véhicule arrière 1. La glace 1 comporte différents secteurs, S1, S2, S3, chacun étant dédié à un type de signalisation: freinage, feu de recul ou feu de route. Cette glace est apte à se fixer sur le boitier du feu et de porter une marque d'identification, comme expliqué ci-dessous en référence aux figures correspondantes. En particulier, la dent de soudure 11 présentée sur la figure 1b entoure les trois secteurs S1 à S3.

La vue en coupe de la figure 1b, selon le plan B-B de la figure 1a, illustre la glace 1 fixée sur le boitier 12 du feu de véhicule 20, lui-même fixé sur une carrosserie 14. La glace 1 et le boîtier 12 sont constitués par moulage de Plexiglass ®. Selon cet exemple de réalisation, la glace 1 possède une dent de soudure 11 apte à être soudée à une protubérance 13 du boitier 12 par un traitement thermique approprié, selon une durée et un profil de température connu de la personne du métier. La dent de soudure 11 présente une face d'extrémité 15 gravée d'une marque d'identification tactile qui est agrégée à la protubérance 13 du boitier 12 lors du traitement thermique.

La figure 2 montre de manière plus détaillée la glace 1 présentée selon la coupe selon le plan BB de la figure 1 avant le traitement thermique de fixation sur le boitier 12. Il apparaît que la dent de soudure 11 de la glace 1 présente une face d'extrémité 15 sur laquelle est inscrite en relief une marque d'identification tactile 21, codée ici en braille. La marque d'identification 21 vient de moulage dans cet exemple.

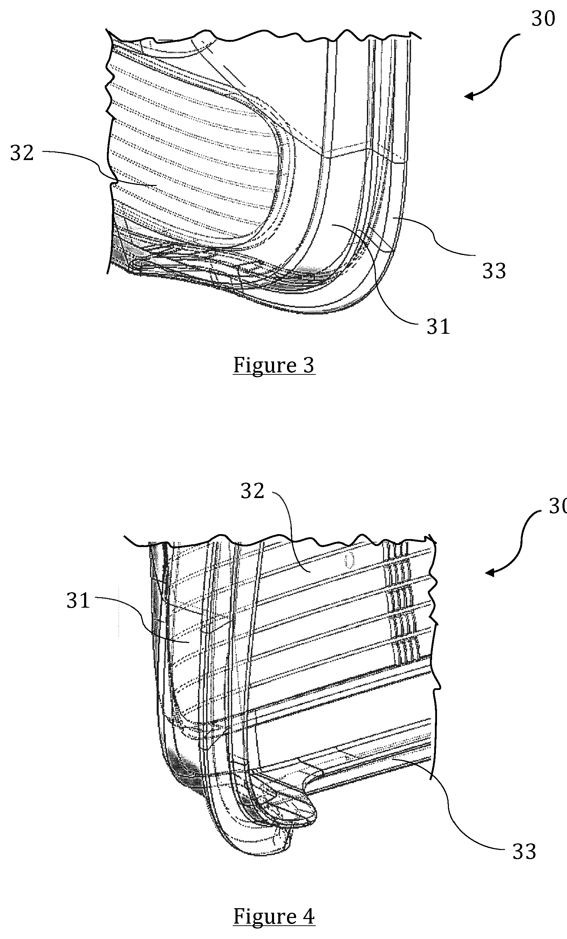

La figure 3 présente un autre exemple de réalisation d'une glace 30, vue de l'extérieur. Cette glace 30 comprend une partie 31 sensiblement incolore et une partie 32 colorée, de couleur rouge dans l'exemple. Sur cette glace 30, la protubérance de fixation est constituée d'une dent 33 entourant le bord de la glace 30 pour former une nervure.

L'intérieur de la glace 30 est illustré partiellement sur la vue en perspective de la figure 4. Sur cette vue, la partie incolore 31 laisse transparaître les rayures parallèles de la zone colorée 32. La nervure 33 servant à la fixation de la glace 30 est destinée à être solidarisée à un pourtour du boitier (non représenté) par le traitement thermique évoqué ci-dessus. Une marque d'identification tactile, telle que la marque 21 de la figure 2, est formée sur la nervure 33 et son agrégation dans le pourtour du boitier permet alors de faire disparaître cette marque d'identification du regard de l'utilisateur final.

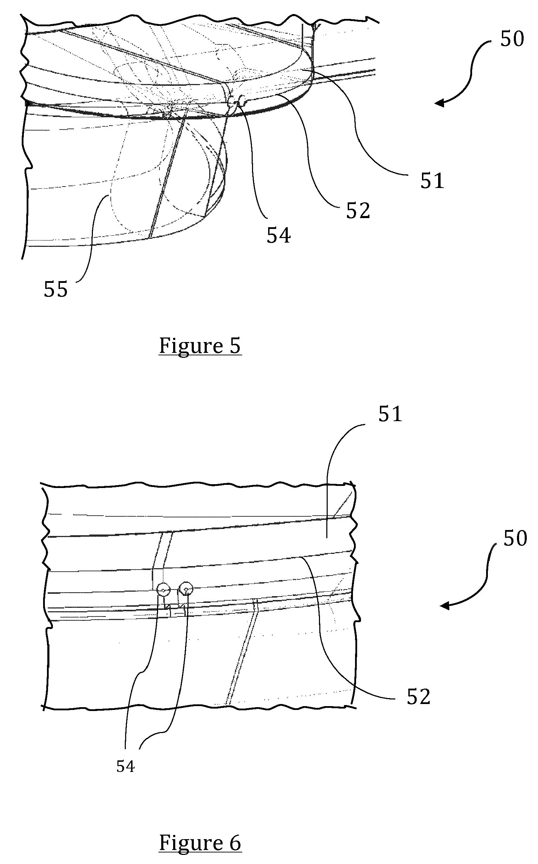

Un autre exemple de réalisation de marque d'identification est présenté sur la vue perspective de la figure 5. Sur cette figure, une glace 50, montrant par transparence la forme 55 de la glace 50 à travers la vue observée, présente une nervure épaisse 51 formant un bourrelet. Cette épaisseur facilite l'inscription en relief d'une marque d'identification 54 sur la tranche 52 du bourrelet 51. La marque d'identification comporte ici deux points 54 de l'écriture Braille, qui deviennent alors invisibles par agrégation lors du soudage du bourrelet 51 sur une protubérance de boitier (non représentée) par ledit traitement thermique.

La figure 6 présente une vue latérale agrandie de la glace 50 de la figure 5, montrant la marque d'identification 54 localisée sur la tranche 52 de la nervure 51, cette localisation permettant à la marque 54 de devenir invisible après avoir été solidarisée au boitier.

L'invention n'est pas limitée aux exemples de réalisation décrits et représentés. Ainsi, la marque d'identification peut être relativement plus complexe pour fournir plus d'information lorsque la zone de fixation est une nervure dont la longueur est celle de la périphérie de la glace.

Par ailleurs, la fixation de la glace sur le boitier peut s'effectuer autrement que par effet de chaleur sur une dent de soudure. Elle peut aussi être réalisée par collage, par emmanchement à force, par clipsage indémontable ou équivalent.

De plus, le marquage d'identification peut être réalisé de manière tactile, en relief ou en creux, par moulage ou par chauffage local, ou encore par un traitement superficielle de la surface, par exemple par traitement chimique ou mécanique.

## Revendications

1. Procédé de marquage invisible d'une glace d'éclairage (1, 30, 50) fixée sur un support (12), la glace (1, 30, 50) et le support (12) présentant chacun au moins une zone périphérique de fixation (15, 33, 51 ; 13) de l'un sur l'autre, **caractérisé en ce qu'**il comporte les étapes successives suivantes;
- un marquage d'identification (21, 54) est préalablement réalisé sur une partie de surface de la zone périphérique de fixation (11, 33, 51) de la glace (1, 30, 50);
- les zones périphériques de fixation (11, 33, 51 ; 13) de la glace (1, 30, 50) et du support (12) sont positionnées en vis-à-vis;
- les zones périphériques de fixation (11, 33, 51 ; 13) de la glace (1, 30, 50) et du support (12) sont solidarisées l'une à l'autre au moins partiellement de sorte que la partie de surface de la zone périphérique de fixation (11, 33, 51) de la glace (1, 30, 50) contenant le marquage d'identification (21, 54) est agrégée à une partie de surface correspondante de la (d'une) zone de fixation du support (13).

2. Procédé selon la revendication 1, dans lequel le marquage d'identification (21, 54) est réalisé au choix par moulage ou par chauffage local pour ajouter ou retirer de la matière.

3. Procédé selon l'une des revendications 1 ou 2, dans lequel la glace (1, 30, 50) et le support (12) sont solidarisés au choix par chauffage, collage et compression thermique des parties de surface des zones périphériques correspondantes.

4. Feu d'éclairage apte à mettre en oeuvre le procédé selon l'une quelconque des revendications 1 à 3, comportant un boitier (12) apte à contenir un dispositif d'éclairage et équipé d'au moins une zone périphérique de fixation (11, 33, 51) d'une glace (1, 30, 50), cette glace (1, 30, 50) étant équipée d'au moins une zone périphérique de fixation (11 33, 51) sur le boitier (12), **caractérisé en ce qu'**il comporte des zones périphériques de fixation (11, 33, 51 ; 13) du boîtier (12) et de la glace (1, 30, 50) disposées en vis-à-vis et au moins en partie solidarisées, la (une) zone périphérique de fixation (11, 33, 51) de la glace (1, 30, 50) possédant une marque d'identification agrégée sur une partie de surface solidarisée avec une partie de surface de la (d'une) zone de fixation (13) du boîtier correspondante.

5. Feu d'éclairage défini selon la revendication 4, dans lequel les zones périphériques de fixation (11, 33, 51 ; 13) de la glace marquée (1, 30, 50) et du support (12) à solidariser sont constituées au choix entre des protubérances (11, 13) et une protubérance et un creux de formes sensiblement complémentaires, la marque d'identification (21, 54) étant réalisée respectivement sur une extrémité (15, 52) de protubérance (11 33, 51) ou une portion de creux complémentaire.

6. Feu d'éclairage défini selon l'une des revendications 4 ou 5, dans lequel, la (chaque) zone périphérique de fixation de la glace (1, 30, 50) présentant une forme de dent de soudure (11) terminée par une face d'extrémité (15), la marque d'identification (21) est formée sur la face d'extrémité (15) de la dent de soudure (11).

7. Feu d'éclairage défini selon l'une quelconque des revendications 4 ou 5, dans lequel la marque d'identification (21, 54) est formée sur une face latérale de la dent de soudure (11).

8. Feu d'éclairage défini selon l'une quelconque des revendications 4 ou 5, dans lequel la (chaque) zone périphérique de fixation de la glace (1, 30, 50) est constituée d'une nervure en forme de bourrelet (33, 51) s'étendant sur un pourtour de la glace (30, 50), la marque d'identification étant alors formée sur la nervure.

9. Feu d'éclairage défini selon l'une quelconque des revendications 4 à 8, dans lequel la marque d'identification (21, 54) est formée en relief, en particulier en écriture Braille.
Véhicule automobile comportant au moins un feu d'éclairage défini selon l'une quelconque des revendications 4 à 9, ce feu placé à l'avant et/ou à l'arrière du véhicule pour l'éclairage et/ou la signalisation.
